# EUROPEAN PATENT SPECIFICATION

(11) **EP 4 126 575 B1**
(45) Date of publication and mention of the grant of the patent: **04.09.2024**
(21) Application number: 21717375.6
(22) Date of filing: 01.04.2021
(51) Int. Cl.: B60J 1/20

(54) **SHADING DEVICE AND VEHICLE DOOR**
BESCHATTUNGSVORRICHTUNG UND FAHRZEUGTÜR
DISPOSITIF D'OMBRAGE ET PORTIÈRE DE VÉHICULE

(30) Priority: 03.04.2020 CN 202010259916
(43) Date of publication of application: 08.02.2023
(73) Proprietor: Bayerische Motoren Werke Aktiengesellschaft, 80809 München (DE)
(72) Inventor: YANG, Xiaofei, Beijing, 101318 (CN); XIA, Yongpeng, Beijing, 101318 (CN)
(86) International application number: PCT/EP2021/058628
(87) International publication number: WO 2021/198423

(56) References cited:
- CN-A- 108 698 490
- TW-U- M 591 928
- US-A- 4 874 026
- US-A1- 2006 082 192

## Description

### Technical Field

The present invention relates to a shading device for shading the light. The shading device may be applied to such as a vehicle, for example may be applied to a side window, a windshield, a back window or a sunroof of a passenger car. The present invention also relates to a vehicle door having such a shading device.

### Background of Invention

In some known vehicles a shading device is provided and it may be used for shading the light such as the sunlight on a sunny summer day, which may be energy-efficient and may improve the comfort of a passenger. The shading device may have a shading curtain.

US4874026A has disclosed a vehicle window screen assembly mounted on an inside of a vehicle windshield above a vehicle dashboard. The assembly includes a shading curtain having a single layer of screen. The single layer of screen is deployable and extractable and has two opposite longitudinal sides guided in respective guide grooves.

US2006082192A1 has disclosed a sun shade for a side window of a vehicle door, wherein the side window and the sun shade are integrated as a module for a vehicle. The module comprises a frame portion having a window panel and comprises a sun shade screen that is movable along a channel of the frame portion so as to at least partially shield the window panel.

CN108698490A has disclosed a shading system for a vehicle comprising a shading curtain with a first and a second shading layer, wherein a relative position of the first and the second shading layer with respect to each other is adjustable, so that the shading curtain has an adjustable shading effect. The shading layers are provide with respective pull-out profiles, wherein the two pull-out profiles, as a whole, may be regarded as a drawing device. The drawing device is manually operatable, in order to pull out the shading curtain, and can be hang onto an upper suspension means on a side door of a vehicle. The drawing device is provided with a manually operatable actuator which is configured to adjust the relative position of the first and the second shading layer with respect to each other.

### Summary of Invention

In the research, the inventors of the present invention found, the shading device may generate interference or may have an instable shading effect due to the external interference such as the vibration of the vehicle in operation or the own gravity of the shading device in some cases.

An object of the present invention is to provide an improved shading deviced.

For this purpose, a shading device is proposed, comprising:
a retractable and deployable shading curtain that includes at least one shading layer and has a first longitudinal side and a second longitudinal side opposite to the first longitudinal side;
a drawing device configured to deploy the shading curtain; and
a first guide rail having a groove configured to receive and guide the first longitudinal side of the shading curtain;
wherein a deployed section of the first longitudinal side of the shading curtain is at least partially received in the groove when the shading curtain is in a partially or finally deployed state;
wherein the first longitudinal side has a support member, by means of which the first longitudinal side is receivable and guidable in the groove.

Furthermore, according to the present invention, the shading curtain includes a first shading layer made of a flexible material and a second shading layer made of a flexible material; wherein the first shading layer has a first support member, and the second shading layer has a second support member; wherein the first support member is configured to generate a magnetic attractive force with a first groove wall of the first guide rail, and the second support member is configured to generate a magnetic attractive force with a second groove wall of the first guide rail opposite to the first groove wall; and/or wherein the first support member is configured to generate a magnetic attractive force with a bottom of the first guide rail, and the second support member is configured to generate a magnetic attractive force with the bottom of the first guide rail.

In such a shading device, in a way that the first longitudinal side of the shading curtain is received and guided in the groove of the first guide rail, a relatively stable shading effect may be obtained, or the disturbing noise caused by collision of components of the shading device may be at least reduced, or the possible light leakage in the first longitudinal side may be at least reduced.

In some embodiments, the groove may be U-shaped.

In some embodiments, the first shading layer may be made of fabric.

In some embodiments, the second shading layer may be made of fabric.

In some embodiments, a winding axis of the shading curtain may be substantially in a vertical line. Therefore, the shading curtain can be pulled laterally, or to say can be deployed and rolled up in a direction substantially vertical to the vertical line.

In some embodiments, the winding axis of the shading curtain may form an angle of no more than 30 degrees, for example about 5 degrees, about 10 degrees or about 15 degrees, with a vertical line.

In some embodiments, the first longitudinal side may be an upper longitudinal side and the second longitudinal side may be a lower longitudinal side.

In comparison, in a well known shading device, a winding axis of a shading curtain is in a horizontal line, and thus this shading curtain can be pulled up and down.

In some embodiments, the first and the second support member are configured for sliding along the groove.

In some embodiments, a width of the groove and a width of the first longitudinal side of the shading curtain together with the support members may be adapted to each other, so that the first longitudinal side of the shading curtain together with the support members may form a clearance fit with the groove.

In the research, the inventors of the present invention found, in comparison with a shading curtain that can be pulled up and down, an upper longitudinal side of a shading curtain that can be pulled laterally may be easily affected by external interference such as vehicle vibration and so on. In addition, the inventors found, reinforcement measures for the upper longitudinal side of the shading curtain may be unfavorable to the shape stability of the shading curtain during a deployment process and in a finally deployed position due to the increase of gravity. It's surprising, the shape stability of the shading curtain during the deployment process and in the finally deployed position can be improved by means of the appropriate reception and guidance of the support members in the first guide rail. With the aforementioned clearance fit, the shape stability of the shading curtain can be further enhanced. For example, the shading curtain may be kept in good flatness and stable shading performance during the deployment process and in the finally deployed position.

In some embodiments, the first and the second support member may be arranged on a side surface of a first longitudinal side of the respective shading layers.

In some embodiments, the support members may form an edge of a first longitudinal sides of the respective shading layers.

In the case where the shading curtain can be pulled laterally, especially in a combination of the magnetic force with the aforementioned clearance fit, it may be further ensured that the shading curtain is always kept in good flatness and stable shading performance during the deployment process and in the finally deployed position.

In some embodiments, the first and the second support member have a magnet or are at least partially made of a magnetic material respectively, and the first guide rail has a magnet or is at least partially made of a magnetic material.

In some embodiments, the first and the second support member may be configured to maintain a spacing between deployed sections of the first and the second shading layer during the movement of the shading curtain and/or in the stationary state of the shading curtain.

In some embodiments, the shading device may comprise a second guide rail having a groove.

In some embodiments, the groove of the second rail may be configured to receive and guide a second longitudinal side of the shading curtain.

In some embodiments, the second longitudinal side may have a support member, by which the second longitudinal side can be received and guided in the groove of the second guide rail.

In some embodiments, the support member of the second longitudinal side and the second guide rail can generate a magnetic attractive force and/or a magnetic repulsive force.

In some embodiments, the support member of the second longitudinal side may be configured to maintain a spacing between the deployed sections of the first and the second shading layer during the movement of the shading curtain and/or in the stationary state of the shading curtain, in particular in cooperation with the support member of the first longitudinal side.

In some embodiments, the shading device may be configured for a vehicle, such as a road vehicle, for example a passenger car.

In some embodiments, the shading device may be configured for a side window of a motor vehicle, for example for a side window of a front door or a rear door of a motor vehicle.

In some embodiments, the shading curtain may be configured to be deployed from one side to the other side of a front side and a rear side of the side window, wherein the first longitudinal side is an upper longitudinal side, and the second longitudinal side is a lower longitudinal side.

In some embodiments, the first and the second shading layer may move relative to each other in a deployment direction of the shading curtain, and thus the shading curtain has an adjustable light transmission property in dependence on a relative position of the first and the second shading layer.

In some embodiments, the support member may be a member extending continuously on the first longitudinal side of the shading curtain, or may be a plurality of members distributed on the first longitudinal side of the shading curtain.

In some embodiments, the support member may be an integral part of the respective longitudinal side, or may be attached to the respective longitudinal side as a separate attachment.

In some embodiments, the light transmission property of the shading curtain may be adjusted as required. For example, it's possible that the shading curtain is switched to a maximum light transmission state, so as to obtain the external light in an inner room of the vehicle or observe the outside from the inside of the vehicle. For example, it's also possible that the shading curtain is switched to a minimum light transmission state such as an opaque state, so as to shield the hot sunlight or to obtain good privacy.

In some embodiments, the drawing device may be configured to draw the shading curtain from the inactive retracted state to the active deployed state.

In some embodiments, a deployment direction of the shading curtain may be identical to a movement direction of the first and the second drawing member relative to each other. This is particularly friendly in the deployment operation and in the switching operation of the light transmission states of the shading curtain.

In some embodiments, the shading device may comprise a driving device configured to drive the drawing device. For example, the driving device may be an electric motor or a hydraulic driving device.

In some embodiments, the driving device may be configured to drive the drawing device, so that the drawing device moves as a whole to deploy and/or retract the shading curtain. Alternatively or additionally thereto, the driving device may be configured to drive the drawing device, so that the first and the second drawing member linearly move relative to each other.

In some embodiments, the driving device can drive the drawing device by means of a support rod.

In some embodiments, the support rod can move in a plane.

In some embodiments, the shading device may include a second guide rail configured to receive and guide the support rod.

In some embodiments, the driving device can drive the support rod by means of a Bowden cable.

In some embodiments, each individual shading layer may have distributed first and/or second light transmission areas. For example, the first and second light transmission areas may be arranged alternately and periodically, and preferably an extension direction of the first and second light transmission areas are orthogonal to the deployment direction of the shading curtain.

In some embodiments, it is possible that in the first relative position, the first light transmission areas of the first and the second shading layer overlap, and the second light transmission areas of the first and the second shading layer overlap.

In some embodiments, it is possible that in the second relative position, the first light transmission areas of the first shading layer overlap with the second light transmission areas of the second shading layer, and the second light transmission areas of the first shading layer overlap with the first light transmission areas of the second shading layer.

In some embodiments, the shading device may comprise a return spring acting on the shading curtain in a winding direction.

In some embodiments, the first and the second shading layer may be respectively provided with a reel and a return spring acting on the reel in the winding direction.

In some embodiments, the shading device may have a housing, into which the shading curtain may be rolled, and in which the reel and the return spring for the shading curtain may be accommodated.

In some embodiments, one of the first and the second shading layer of the shading curtain may have a support member on its first longitudinal side, while the other shading layer may have no support member on its first longitudinal side. At least one of the first and the second shading layer can be received and guided in the groove of the second guide rail by means of the support member.

In some embodiments, the second guide rail and the second longitudinal side may have the same or similar magnet arrangement as the first guide rail and the first longitudinal side.

A vehicle door for a motor vehicle is also proposed, the vehicle door having a side window, where the vehicle door is provided with a shading device according to any one of the embodiments according to the present invention, wherein the shading curtain of the shading device is configured to be deployed from one side to the other side of a front side and a rear side of the side window, and the first guide rail of the shading device extends along an upper edge of the side window.

It should be pointed out, individual technical features mentioned above, individual technical features to be mentioned below and individual technical features that can be obtained in the drawings can be arbitrarily combined with each other, as long as the technical features to be combined are not contradictory.

### Brief Description of Drawings

Embodiments of the present invention will now be described with reference to the accompanying drawings, in which:
Figs. 1A to 1C are perspective views of a vehicle door equipped with a shading device according to an embodiment of the present invention;
Figs. 2A and 2B are partial cross-sectional views of shading devices according to two different unclaimed embodiments in a region of a guide rail; and
Figs. 3A and 3B are partial cross-sectional views of shading devices according to two different embodiments of the invention in a region of a guide rail.

### Detailed Description of the Drawings

In order to make the object, features and advantages of the present invention more understandable, specific embodiments of the present invention are described in detail with reference to the accompanying drawings. In the following description, specific details are set forth in order to provide thorough understanding of the present invention. However, the present invention may be implemented in other ways different from those described here.

Therefore, the present invention is not limited to the specific embodiments disclosed below.

It should be pointed out, the singular form in the texts also includes the plural form, unless excluded explicitly. Furthermore, as used herein, components, steps, operations and elements referring to "comprising" or "including" mean that at least one other component, step, operation and element may be present or added. The terms "first" and "second" in the texts are used for the convenience of describing and distinguishing different components having the same name, and do not indicate the order or a primary and secondary relationship of these components.

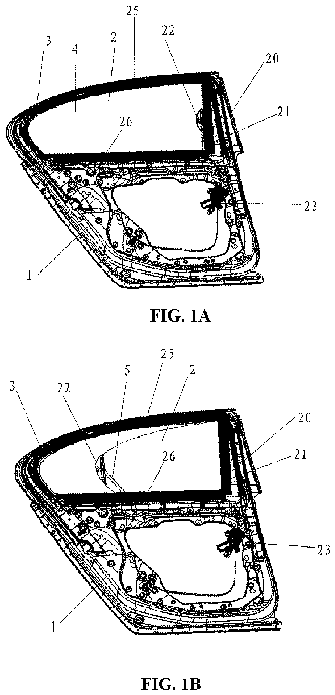

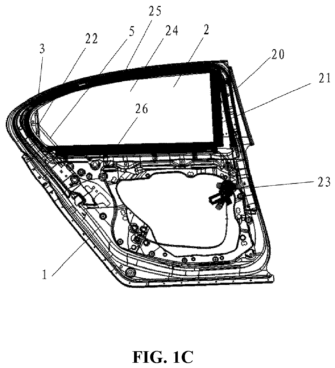

Figs. 1A to 1C are perspective views of a vehicle door 1 equipped with a shading device 20 according to an embodiment of the present invention as viewed from the inside of a vehicle, wherein an inactive retracted state (e.g. a predetermined finally rolled up state) of the shading device 20 is shown in Fig. 1A, an intermediate state of the shading device 20 during a deployment process is shown in Fig. 1B, and an active deployed state (a predetermined finally deployed state) of the shading device 20 is shown in Fig. 1C, in which the shading device 20 may at least partially shield the light from the outside of the vehicle window into an inner room of the vehicle.

The vehicle door 1 has a side window 2 having a window frame 3 and a window glass 4 mounted in the window frame. The side window 2 is provided with the shading device 20 that may be arranged in an inner room of the vehicle, in other words, in the inside of the side window 2. The shading device 20 includes a shading curtain 24. The shading device 20 may include a housing 21 that may be mounted for example in a rear end region of the side window 2, wherein the shading curtain 24 may be rolled up and accommodated in the housing 21, and may be pulled out from the housing 21 by a drawing device 22 until reaching a front end region of the side window 2 opposite to the rear end region, i.e. reaching an active deployed state. The shading curtain 24 has two longitudinal sides opposite to each other, wherein a first upper longitudinal side may have an extension substantially identical to that of an upper edge of the window frame in a predetermined finally deployed state, and therefore extend substantially in the deployment direction. A second lower longitudinal side may have an extension substantially identical to that of a lower edge of the window frame, and thus extend substantially straight in the deployment direction.

The shading device 20 may further include a driving device 23 that may be arranged for example on a sheet metal part of the vehicle door, and may be covered by a door trim panel. The driving device 23 may be for example an electric motor. The driving device 23 may be configured to drive the drawing device 22 so as to move the drawing device 22 as a whole to deploy and/or retract the shading curtain 24. The transmission between the driving device 23 and the drawing device 22 may be suitably designed as required. For example, the driving device 23 may drive a Bowden cable that can drive an operation rod 5, which can operate the drawing device 22. For example, it is also possible that the driving device 23 drives an endless wire rope transmission that can drive an operation element such as the operation rod 5, which can operate the drawing device 22.

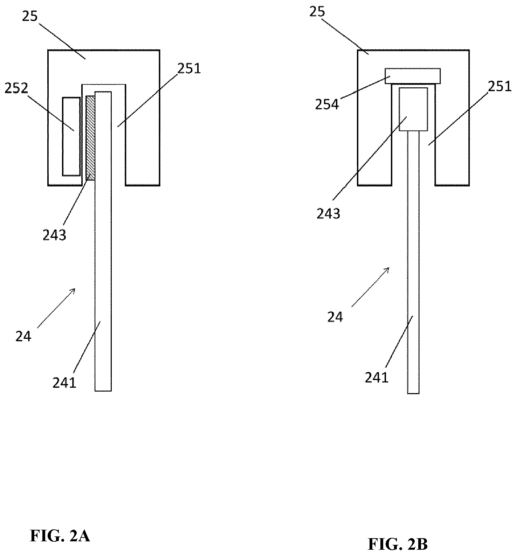

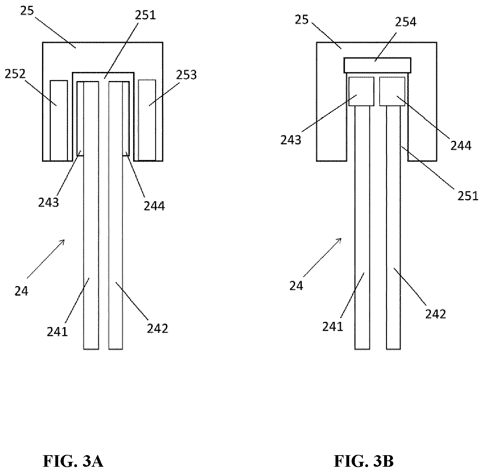

The shading device may have a first guide rail 25 configured for a first longitudinal side of the shading curtain 24 (an upper longitudinal side of the shading curtain in Figs. 1A to 1C). Details of shading devices 20 according to various embodiments in a region of the first guide rail 25 and the first longitudinal side will be described in more detail later with reference to Figs. 2A and 2B and Figs. 3A and 3B. The first guide rail 25 and its groove may have an extension substantially identical to that of the upper edge of the window frame.

The shading device may have a second guide rail 26 in which the operation element such as the operation rod 5 and/or the Bowden cable may be guided. To this end, for example, the second guide rail 26 may have a groove. The driving device 23 drives the operation element such as the operation rod 5 to move in the groove of the second guide rail. It's advantageous that the operation rod 5 can move in a plane. It's particularly advantageous that the operation rod 5 can be deflected by a predetermined angle from the inactive retracted position, i.e. from a substantially vertical position, in a predetermined deployment displacement of the shading curtain 24, and then the angular position of the operation rod 5 can be kept unchanged in the following deployment displacement of the shading curtain 24. Additionally, a second longitudinal side of the shading curtain 24 (a lower longitudinal side of the shading curtain in Figs. 1A to 1C) may also be received and guided in the groove of the second guide rail 26.

The usage of the shading device 20 shown in Figs. 1A to 1C is exemplary. In an alternative usage, a deployed length of the shading curtain 24 may correspond to a part of the length of the side window 2, for example, a half length thereof. In an alternative usage, the housing of the shading device may be arranged in a lower end region of the side window 2, and the shading curtain may be deployed in an upward direction toward an upper end region of the side window 2. In an alternative usage, the shading device 20 may be permanently kept in the finally deployed state.

The shading curtain 24 may be configured with a single layer, i.e. have exact one shading layer 241, as shown in Figs. 2A and 2B. The shading curtain 24 may also be configured with two layers, i.e. have a first shading layer 241 and a second shading layer 242, as shown in Figs. 3A and 3B. For example, the first and the second shading layer 241, 242 may respectively have at least two types of light transmission areas with different light transmission properties, and may move relative to each other, so that the shading curtain 24 may have an adjustable light transmission property. For example, it may be switched between a maximum light transmission state and a substantially opaque state. The shading curtain 24 may also be configured with more layers.

Now, shading devices 20 according to two different unclaimed embodiments are described with reference to Figs. 2A and 2B, which are partial cross-sectional views in a region of a first guide rail 25 and a first longitudinal side, wherein a single shading layer 241 is partially illustrated in a height direction vertical to a deployment direction. The first guide rail 25 may be configured to receive and guide the first longitudinal side of the shading curtain 24 or to say a first longitudinal side of the shading layer 241. The first guide rail 25 may have a groove 251. The first longitudinal side of the shading curtain 24 may be at least sometimes, at least partially received and guided in the groove 251 in a deployment process and in a retraction process of the shading curtain. The shading layer 241 may be provided with a support member 243 on a first longitudinal side and may be guided in the groove 251 by means of the support member. For example, the support member can slide along the first guide rail 25. In the embodiment shown in Fig. 2A, the support member 243 is arranged on a side surface of the first longitudinal side of the shading layer 241, while in the embodiment shown in Fig. 2B, the support member 243 is arranged at an end of the first longitudinal side of the shading layer 241.

It's advantageous that a width of the groove 251 and a width of the first longitudinal side of the shading curtain together with the support member 243 is adapted to each other, so that the first longitudinal side of the shading curtain together with the support member may form a clearance fit with the groove.

It's advantageous that the support member 243 may be a magnet or made of a magnetic material, and the guide rail 25 may include a magnet or be made of a magnetic material, so that the support member 243 and the first guide rail 25 can generate a magnetic attractive force and/or a magnetic repulsive force.

Through the aforementioned clearance fit, or through the aforementioned magnetic force, especially through a combination of both, it may be ensured that the shading curtain is always kept in good flatness and stable shading performance during the deployment process and in the finally deployed position, and has good resistance to external interference such as vehicle vibration.

In the embodiment shown in Fig. 2A, the first guide rail 25 has a magnet 252 arranged in a groove wall of the first guide rail and can generate a magnetic attractive force with the support member 243. It's also possible that an additional magnet is provided in the other groove wall, which can generate a magnetic repulsive force with the magnet 243, which may be beneficial for holding the support member 243 on the groove wall having the magnet 252. In an embodiment not shown, alternatively or additionally thereto, an additional magnet is provided on the other side surface of the first longitudinal side, and an additional magnet is provided in the other groove wall, which can generate a magnetic repulsive force.

In the embodiment shown in Fig. 2B, the first guide rail 25 has a magnet 254 at its bottom, which can generate a magnetic attractive force with the support member 243. The first longitudinal side of the shading curtain 20 or to say the first longitudinal side of the shading layer 241 can be well received and guided in the groove 251 of the guide rail 25 through the interaction of the magnets. When the motor vehicle equipped with the shading device 20 drives, vibration may occur. Through the interaction of the magnets, the shading curtain 20 may be not obviously affected by the vibration of the motor vehicle and thus can be kept in good optical performance.

In addition, it's possible that the embodiment shown in Fig. 2A may be combined with the embodiment shown in Fig. 2B, and thus the first longitudinal side can be magnetically attracted to one of the groove walls as well as the bottom of the first guide rail 25.

Shading devices 20 according to two different embodiments according to the invention are described with reference to Figs. 3A and 3B that are partial cross-sectional views in a region of a first guide rail 25 and a first longitudinal side, wherein two shading layers 241, 242 are partially illustrated in a height direction perpendicular to a deployment direction. The first guide rail 25 may be configured to receive and guide the first longitudinal side of the shading curtain 24 of the shading curtain device 20. The first guide rail 25 may have a groove 251. First longitudinal sides of the two shading layers 241, 242 of the shading curtain 20 can be at least sometimes, at least partially received and guided in the groove 251 in a deployment process and in a retraction process of the shading curtain. The two shading layers 241, 242 may be respectively provided with a support member 243, 244 on the first longitudinal sides, and may be guided in the groove 251 by means of the support members. In the embodiment shown in Fig. 3A, the support members 243, 244 are arranged on outer side surfaces of the first longitudinal sides of the shading layers 241, 242, while in the embodiment shown in Fig. 3B, the support members 243, 244 are arranged at the ends of the first longitudinal sides of the shading layers 241, 242.

It's advantageous that a width of the groove 251 and a width of the first longitudinal side of the shading curtain together with the support members 243 and 244 are adapted to each other, so that the first longitudinal side of the shading curtain together with the support members can form a clearance fit with the groove.

It's advantageous that the support members 243, 244 may be magnets or made of a magnetic material, and the first guide rail 25 may include a magnet or made of a magnetic material, so that the support members 243, 244 and the first guide rail 25 can generate a magnetic attractive force and/or a magnetic repulsive force.

Through the aforementioned clearance fit, or through the aforementioned magnetic force, especially through a combination of both, it may be ensured that the shading curtain is always kept in good flatness and stable shading performance during the deployment process and in the finally deployed position, and has good resistance to external interference such as vehicle vibration.

In the embodiment shown in Fig. 3A, the guide rail 25 has two magnets 252, 253 that are respectively arranged in one of the groove walls of the first guide rail 25 and can respectively generate a magnetic attractive force with one of the support members 243, 244 . In the embodiment shown in Fig. 3B, the first guide rail 25 has a magnet 254 at the bottom thereof, which is common for the two support members, and can generate a magnetic attractive force with the two support members 242, 244. The first longitudinal side of the shading curtain 20 or to say the first longitudinal sides of the two shading layers 241, 242 can be well received and guided in the groove 251 of the guide rail 25 through the interaction of the magnets. Alternatively thereto, another possibility is that the support member 243 and the magnet 252 can generate a magnetic attractive force, and the support member 244 and the magnet 253 can generate a magnetic repulsive force, and the support member 244 is arranged on an inner side surface of the first longitudinal side of the second shading layer 242 facing the first shading layer 241.

In addition, it's possible that the embodiment shown in Fig. 3A may be combined with the embodiment shown in Fig. 3B, and thus the first longitudinal side of the first shading layer can be magnetically attracted to one of the groove walls as well as the bottom of the first guide rail 25, and the first longitudinal side of the second shading layer can be magnetically attracted to the other groove wall as well as the bottom of the first guide rail 25.

It's advantageous that the first support member 243 and the second support member 244 may be configured to maintain the spacing between the deployed sections of the first and the second shading layer 241 and 242 during the movement of the shading curtain 24 and/or in the stationary state of the shading curtain 24.

In addition, the second guide rail 26 may be identically or similarly formed with a groove, and the second guide rail 26 and the second longitudinal side of the shading curtain 24 may be identically or similarly provided with a magnet arrangement. In order to avoid repetition, references may be made to the above description of the first guide rail 25 and the first longitudinal side, unless otherwise stated differently. For example, the second longitudinal side may also have the same or similar first and second support member, which are configured to maintain the spacing between the deployed sections of the first and second shading layers, in cooperation with the first and the second support member of the first longitudinal side, during the movement of the shading curtain and/or in the stationary state of the shading curtain.

Furthermore, each support member may be a member extending continuously on the first or the second longitudinal side of the shading curtain, or may be a plurality of members distributed, for example uniformly distributed, on the first or the second longitudinal side of the shading curtain.

In an embodiment not shown, the first guide rail and/or the second guide rail may have two separate parallel grooves for the first longitudinal side and/or the second longitudinal side of the two shading layers. Here, the configuration of one of the two shading layers and one of the two grooves may be similar to the configuration of the single-layer shading curtain and the one groove in the aforementioned embodiments.

It may be understood that the present invention is described with the aid of the above specific embodiments, but isn't limited thereto. Individual technical features introduced in the present application, even if they are introduced in different paragraphs of the description or in different embodiments, may be arbitrarily combined with each other, as long as they are not contradictory.

## Claims

1. A shading device (20), comprising:
a retractable and deployable shading curtain (24) that includes at least one shading layer (241, 242) and has a first longitudinal side and a second longitudinal side opposite to the first longitudinal side;
a drawing device (22) configured to deploy the shading curtain; and
a first guide rail (25) having a groove (251) configured to receive and guide the first longitudinal side of the shading curtain;
wherein a deployed section of the first longitudinal side of the shading curtain is at least partially received in the groove when the shading curtain is in a partially deployed or finally deployed state;
wherein the first longitudinal side has a support member (243, 244), by means of which the first longitudinal side is receivable and guidable in the groove;
**characterized in that** the shading curtain includes a first shading layer (241) made of a flexible material and a second shading layer (242) made of a flexible material;
wherein the first shading layer has a first support member (243), and the second shading layer has a second support member (244);
wherein the first support member (243) is configured to generate a magnetic attractive force with a first groove wall of the first guide rail (25), and the second support member (244) is configured to generate a magnetic attractive force with a second groove wall of the first guide rail (25) opposite to the first groove wall; and/or
wherein the first support member is configured to generate a magnetic attractive force with a bottom of the first guide rail, and the second support member is configured to generate a magnetic attractive force with the bottom of the first guide rail.

2. The shading device (20) according to claim 1, **characterized in that** a winding axis of the shading curtain is in a vertical line, or forms an angle of no more than 30° with a vertical line, wherein the first longitudinal side is an upper longitudinal side and the second longitudinal side is a lower longitudinal side.

3. The shading device (20) according to any one of claims 1 or 2, **characterized in that** the first and the second support member are configured to slide along the groove;
preferably, wherein a width of the groove and a width of the first longitudinal side of the shading curtain together with the support members are adapted to each other, so that the first longitudinal side of the shading curtain together with the support members form a clearance fit with the groove.

4. The shading device (20) according to any one of claims 1 to 3, **characterized in that** the first and the second support member are arranged on a side surface of a first longitudinal side of the respective shading layers, or the first and the second support member form an edge of a first longitudinal side of the respective shading layers.

5. The shading device (20) according to any one of claims 1 to 4, **characterized in that** the first and the second support member include a magnet or are at least partially made of a magnetic material respectively, and the first guide rail includes a magnet or is at least partially made of a magnetic material.

6. The shading device (20) according to any one of claims 1 to 5, **characterized in that** the first and the second support member are configured to maintain a spacing between deployed sections of the first and the second shading layer during a movement of the shading curtain and/or in a stationary state of the shading curtain.

7. The shading device (20) according to any one of claims 1 to 6, **characterized in that** the shading device comprises a second guide rail (26) having a groove configured to receive and guide the second longitudinal side of the shading curtain.

8. The shading device (20) according to claim 7, **characterized in that** the second longitudinal side has a support member, by means of which the second longitudinal side is receivable and guidable in the groove of the second guide rail;
preferably, wherein the support member of the second longitudinal side and the second guide rail can generate a magnetic attractive force and/or a magnetic repulsive force.

9. The shading device (20) according to claim 8, **characterized in that** the support member of the second longitudinal side is configured to maintain a spacing between deployed sections of the first and the second shading layer during a movement of the shading curtain and/or in a stationary state of the shading curtain.

10. The shading device (20) according to any one of claims 1 to 9, **characterized in that** the shading device is configured for a vehicle.

11. The shading device (20) according to claim 10, **characterized in that** the shading device is configured for a side window of a motor vehicle;
preferably, wherein the shading curtain (24) is configured to be deployed from one side to the other side of a front side and a rear side of the side window, wherein the first longitudinal side is an upper longitudinal side, and the second longitudinal side is a lower longitudinal side.

12. The shading device (20) according to any one of claims 1 to 11, **characterized in that** the first and the second support member are respectively a member extending continuously on the first longitudinal side of the shading curtain, or are a plurality of parts distributed on the first longitudinal side of the shading curtain.

13. A vehicle door for a motor vehicle, the vehicle door having a side window, **characterized in that** the vehicle door is provided with a shading device (20) according to any one of claims 1 to 12, wherein the shading curtain (24) of the shading device is configured to be deployed from one side to the other side of a front side and a rear side of the side window, and the first guide rail of the shading device extends along an upper edge of the side window.

## Patentansprüche

1. Beschattungsvorrichtung (20), umfassend:
einen einziehbaren und ausbringbaren Beschattungsvorhang (24), der mindestens eine Beschattungslage (241, 242) aufweist und eine erste Längsseite und eine der ersten Längsseite gegenüberliegende zweite Längsseite hat,
eine Zugvorrichtung (22), die zum Ausbringen des Beschattungsvorhangs ausgestaltet ist, und
eine erste Führungsschiene (25) mit einer Nut (251), die zur Aufnahme und zum Führen der ersten Längsseite des Beschattungsvorhangs ausgestaltet ist,
wobei ein aufgebrachter Abschnitt der ersten Längsseite des Beschattungsvorhangs mindestens teilweise in der Nut aufgenommen ist, wenn der Beschattungsvorhang in einem teilweise oder vollständig ausgebrachten Zustand ist,
wobei die erste Längsseite ein Stützglied (243, 244) hat, mittels dessen die erste Längsseite in der Nut aufnehmbar und führbar ist,
**dadurch gekennzeichnet, dass** der Beschattungsvorhang eine aus einem flexiblen Material hergestellte erste Beschattungslage (241) und eine aus einem flexiblen Material hergestellte zweite Beschattungslage (242) aufweist,
wobei die erste Beschattungslage ein erstes Stützglied (243) hat und die zweite Beschattungslage ein zweites Stützglied (244) hat,
wobei das erste Stützglied (243) dazu ausgestaltet ist, eine magnetische Anziehungskraft mit einer ersten Nutwand der ersten Führungsschiene (25) zu erzeugen, und das zweite Stützglied (244) dazu ausgestaltet ist, eine magnetische Anziehungskraft mit einer der ersten Nutwand gegenüberliegenden zweiten Nutwand der ersten Führungsschiene (25) zu erzeugen, und/oder
wobei das erste Stützglied dazu ausgestaltet ist, eine magnetische Anziehungskraft mit einem Boden der ersten Führungsschiene zu erzeugen, und das zweite Stützglied dazu ausgestaltet ist, eine magnetische Anziehungskraft mit dem Boden der ersten Führungsschiene zu erzeugen.

2. Beschattungsvorrichtung (20) nach Anspruch 1, **dadurch gekennzeichnet, dass** eine Wickelachse des Beschattungsvorhangs in einer vertikalen Linie liegt oder einen Winkel von höchstens 30° mit einer vertikalen Linie bildet, wobei die erste Längsseite eine obere Längsseite ist und die zweite Längsseite eine untere Längsseite ist.

3. Beschattungsvorrichtung (20) nach einem der Ansprüche 1 oder 2, **dadurch gekennzeichnet, dass** das erste und das zweite Stützglied dazu ausgestaltet sind, entlang der Nut zu gleiten,
vorzugsweise wobei eine Breite der Nut und eine Breite der ersten Längsseite des Beschattungsvorhangs zusammen mit den Stützgliedern aneinander angepasst sind, so dass die erste Längsseite des Beschattungsvorhangs zusammen mit den Stützgliedern eine Spielpassung mit der Nut bilden.

4. Beschattungsvorrichtung (20) nach einem der Ansprüche 1 bis 3, **dadurch gekennzeichnet, dass** das erste und das zweite Stützglied an einer Seitenfläche einer ersten Längsseite der jeweiligen Beschattungslagen angeordnet sind oder das erste und das zweite Stützglied einen Rand einer ersten Längsseite der jeweiligen Beschattungslagen bilden.

5. Beschattungsvorrichtung (20) nach einem der Ansprüche 1 bis 4, **dadurch gekennzeichnet, dass** das erste und das zweite Stützglied einen Magneten aufweisen oder mindestens teilweise jeweils aus einem magnetischen Material hergestellt sind, und die erste Führungsschiene einen Magneten aufweist oder mindestens teilweise aus einem magnetischen Material hergestellt ist.

6. Beschattungsvorrichtung (20) nach einem der Ansprüche 1 bis 5, **dadurch gekennzeichnet, dass** das erste und das zweite Stützglied dazu ausgestaltet sind, während einer Bewegung des Beschattungsvorhangs und/oder in einem stationären Zustand des Beschattungsvorhangs einen Abstand zwischen ausgebrachten Abschnitten der ersten und der zweiten Beschattungslage aufrechtzuerhalten.

7. Beschattungsvorrichtung (20) nach einem der Ansprüche 1 bis 6, **dadurch gekennzeichnet, dass** die Beschattungsvorrichtung eine zweite Führungsschiene (26) mit einer Nut umfasst, die zur Aufnahme und zum Führen der zweiten Längsseite des Beschattungsvorhangs ausgestaltet ist.

8. Beschattungsvorrichtung (20) nach Anspruch 7, **dadurch gekennzeichnet, dass** die zweite Längsseite ein Stützglied hat, mittels dessen die zweite Längsseite in der Nut der zweiten Führungsschiene aufnehmbar und führbar ist,
vorzugsweise wobei das Stützglied der zweiten Längsseite und die zweite Führungsschiene eine magnetische Anziehungskraft und/oder eine magnetische Abstoßungskraft erzeugen können.

9. Beschattungsvorrichtung (20) nach Anspruch 8, **dadurch gekennzeichnet, dass** das Stützglied der zweiten Längsseite dazu ausgestaltet ist, während einer Bewegung des Beschattungsvorhangs und/oder in einem stationären Zustand des Beschattungsvorhangs einen Abstand zwischen ausgebrachten Abschnitten der ersten und der zweiten Beschattungslage aufrechtzuerhalten.

10. Beschattungsvorrichtung (20) nach einem der Ansprüche 1 bis 9, **dadurch gekennzeichnet, dass** die Beschattungsvorrichtung für ein Fahrzeug ausgestaltet ist.

11. Beschattungsvorrichtung (20) nach Anspruch 10, **dadurch gekennzeichnet, dass** die Beschattungsvorrichtung für ein Seitenfenster eines Kraftfahrzeugs ausgestaltet ist,
vorzugsweise wobei der Beschattungsvorhang (24) dazu ausgestaltet ist, von einer Seite zu der anderen Seite einer Vorderseite und einer Rückseite des Seitenfensters ausgebracht zu werden, wobei die erste Längsseite eine obere Längsseite ist und die zweite Längsseite eine untere Längsseite ist.

12. Beschattungsvorrichtung (20) nach einem der Ansprüche 1 bis 11, **dadurch gekennzeichnet, dass** das erste und das zweite Stützglied jeweils ein Glied sind, das sich durchgehend an der ersten Längsseite des Beschattungsvorhangs erstreckt, oder eine Vielzahl von Teilen sind, die an der ersten Längsseite des Beschattungsvorhangs verteilt sind.

13. Fahrzeugtür für ein Kraftfahrzeug, wobei die Fahrzeugtür ein Seitenfenster hat, **dadurch gekennzeichnet, dass** die Fahrzeugtür mit einer Beschattungsvorrichtung (20) nach einem der Ansprüche 1 bis 12 versehen ist, wobei der Beschattungsvorhang (24) der Beschattungsvorrichtung dazu ausgestaltet ist, von einer Seite zu der anderen Seite einer Vorderseite und einer Rückseite des Seitenfensters ausgebracht zu werden, und sich die erste Führungsschiene der Beschattungsvorrichtung entlang eines oberen Rands des Seitenfensters erstreckt.

## Revendications

1. Dispositif pare-soleil (20), comprenant :
un rideau pare-soleil rétractable et déployable (24) qui comporte au moins une couche pare-soleil (241, 242) et a un premier côté longitudinal et un deuxième côté longitudinal opposé au premier côté longitudinal ;
un dispositif de tirage (22) conçu pour déployer le rideau pare-soleil ; et
un premier rail de guidage (25) ayant une rainure (251) conçue pour recevoir et guider le premier côté longitudinal du rideau pare-soleil ;
une section déployée du premier côté longitudinal du rideau pare-soleil étant au moins partiellement reçue dans la rainure lorsque le rideau pare-soleil est dans un état partiellement ou complètement déployé ;
le premier côté longitudinal ayant un élément de support (243, 244), au moyen duquel le premier côté longitudinal peut être reçu et guidé dans la rainure ;
**caractérisé en ce que** le rideau pare-soleil comporte une première couche pare-soleil (241) fabriquée à partir d'un matériau flexible et une deuxième couche pare-soleil (242) fabriquée à partir d'un matériau flexible ;
la première couche pare-soleil ayant un premier élément de support (243), et la deuxième couche pare-soleil ayant un deuxième élément de support (244) ;
le premier élément de support (243) étant conçu pour produire une force d'attraction magnétique avec une première paroi de rainure du premier rail de guidage (25), et le deuxième élément de support (244) étant conçu pour produire une force d'attraction magnétique avec une deuxième paroi de rainure du premier rail de guidage (25) opposée à la première paroi de rainure ; et/ou
le premier élément de support étant conçu pour produire une force d'attraction magnétique avec un fond du premier rail de guidage, et le deuxième élément de support étant conçu pour produire une force d'attraction magnétique avec le fond du premier rail de guidage.

2. Dispositif pare-soleil (20) selon la revendication 1, **caractérisé en ce qu'**un axe d'enroulement du rideau pare-soleil est en ligne verticale, ou forme un angle non supérieur à 30° avec une ligne verticale, le premier côté longitudinal étant un côté longitudinal supérieur et le deuxième côté longitudinal étant un côté longitudinal inférieur.

3. Dispositif pare-soleil (20) selon l'une quelconque des revendications 1 et 2, **caractérisé en ce que** le premier et le deuxième élément de support sont conçus pour coulisser le long de la rainure ;
de préférence, une largeur de la rainure et une largeur du premier côté longitudinal du rideau pare-soleil conjointement avec les éléments de support étant adaptées l'une à l'autre, de sorte que le premier côté longitudinal du rideau pare-soleil conjointement avec les éléments de support forment un ajustement avec jeu avec la rainure.

4. Dispositif pare-soleil (20) selon l'une quelconque des revendications 1 à 3, **caractérisé en ce que** le premier et le deuxième élément de support sont disposés sur une surface latérale d'un premier côté longitudinal des couches pare-soleil respectives, ou le premier et le deuxième élément de support forment un bord d'un premier côté longitudinal des couches pare-soleil respectives.

5. Dispositif pare-soleil (20) selon l'une quelconque des revendications 1 à 4, **caractérisé en ce que** le premier et le deuxième élément de support comportent un aimant ou sont au moins partiellement fabriqués à partir d'un matériau magnétique respectivement, et le premier rail de guidage comporte un aimant ou est au moins partiellement fabriqué à partir d'un matériau magnétique.

6. Dispositif pare-soleil (20) selon l'une quelconque des revendications 1 à 5, **caractérisé en ce que** le premier et le deuxième élément de support sont conçus pour maintenir un espacement entre des sections déployées de la première et de la deuxième couche pare-soleil pendant un mouvement du rideau pare-soleil et/ou dans un état stationnaire du rideau pare-soleil.

7. Dispositif pare-soleil (20) selon l'une quelconque des revendications 1 à 6, **caractérisé en ce que** le dispositif pare-soleil comprend un deuxième rail de guidage (26) ayant une rainure conçue pour recevoir et guider le deuxième côté longitudinal du rideau pare-soleil.

8. Dispositif pare-soleil (20) selon la revendication 7, **caractérisé en ce que** le deuxième côté longitudinal a un élément de support, au moyen duquel le deuxième côté longitudinal peut être reçu et guidé dans la rainure du deuxième rail de guidage ;
de préférence, l'élément de support du deuxième côté longitudinal et le deuxième rail de guidage pouvant produire une force d'attraction magnétique et/ou une force de répulsion magnétique.

9. Dispositif pare-soleil (20) selon la revendication 8, **caractérisé en ce que** l'élément de support du deuxième côté longitudinal est conçu pour maintenir un espacement entre des sections déployées de la première et de la deuxième couche pare-soleil pendant un mouvement du rideau pare-soleil et/ou dans un état stationnaire du rideau pare-soleil.

10. Dispositif pare-soleil (20) selon l'une quelconque des revendications 1 à 9, **caractérisé en ce que** le dispositif pare-soleil est conçu pour un véhicule.

11. Dispositif pare-soleil (20) selon la revendication 10, **caractérisé en ce que** le dispositif pare-soleil est conçu pour une fenêtre latérale d'un véhicule à moteur ; de préférence, le rideau pare-soleil (24) étant conçu pour être déployé d'un côté à l'autre côté d'un côté avant et d'un côté arrière de la fenêtre latérale, le premier côté longitudinal étant un côté longitudinal supérieur, et le deuxième côté longitudinal étant un côté longitudinal inférieur.

12. Dispositif pare-soleil (20) selon l'une quelconque des revendications 1 à 11, **caractérisé en ce que** le premier et le deuxième élément de support sont respectivement un élément s'étendant de façon continue sur le premier côté longitudinal du rideau pare-soleil, ou sont une pluralité de pièces réparties sur le premier côté longitudinal du rideau pare-soleil.

13. Portière de véhicule pour un véhicule à moteur, la portière de véhicule ayant une fenêtre latérale, **caractérisée en ce que** la portière de véhicule est pourvue d'un dispositif pare-soleil (20) selon l'une quelconque des revendications 1 à 12, le rideau pare-soleil (24) du dispositif pare-soleil étant conçu pour être déployé d'un côté à l'autre côté d'un côté avant et d'un côté arrière de la fenêtre latérale, et le premier rail de guidage du dispositif pare-soleil s'étendant le long d'un bord supérieur de la fenêtre latérale.
